# EUROPÄISCHE PATENTSCHRIFT

(11) **EP 0 348 693 B1**
(45) Veröffentlichungstag und Bekanntmachung des Hinweises auf die Patenterteilung: **22.03.1995**
(21) Anmeldenummer: 89110116.4
(22) Anmeldetag: 05.06.1989
(51) Int. Cl.: C07F 7/18

(54) **Verfahren zur Herstellung von Diorganodialkoxysilanen**
Process for the preparation of diorganodialkoxysilanes
Procédé de préparation de diorganodialcoxysilanes

(30) Priorität: 25.06.1988 DE 3821483
(43) Veröffentlichungstag der Anmeldung: 03.01.1990
(60) Teilanmeldung: 94111674.1
(73) Patentinhaber: Witco GmbH, 59180 Bergkamen (DE)
(72) Erfinder: Graefe, Jürgen, Dr. Dipl.-Chem., D-4714 Selm-Cappenberg (DE); Uzick, Wolfram, Dr. Dipl.-Chem., D-4600 Dortmund 50 (DE); Weinberg, Udo, D-4709 Bergkamen (DE)

(56) Entgegenhaltungen:
- LU-A- 28 740
- US-A- 4 777 278
- CHEMICAL ABSTRACTS, Band 56, Nr. 7, 2. April 1962, Spalte 7344, ZusammenfassungNr. 7344h, Columbus, Ohio, US; S. CHRZCZONOWICZ et al.: "Bifunctional siliconemonomers-hydrolysis and condensation. III. Hydrolysis of dialkyl(oraryl)dimethoxy-silanes", & ROCZNIKI CHEM. 34, 1667-74(1960)

## Beschreibung

Die Erfindung betrifft ein Verfahren zur selektiven Herstellung von Diorganodialkoxysilanen durch Umsetzung von Tetraalkoxysilanen bzw. Monoorganotrialkoxysilanen mit Grignard-Verbindungen.

Disubstituierte Dialkoxysilane der allgemeinen Struktur R₂Si(OR)₂ werden unter anderem als Stereomodifier in Katalysatoren zur Herstellung von Polypropylen (PP) eingesetzt (EP-A-0 231 878). Vorteilhaft sind dabei disubstituierte Dialkoxysilane der Formel R¹R²Si(OR³)₂, insbesondere solche mit verzweigten Alkylresten R¹ und R² (EP-A-0 250 229 und DE-A-36 29 932).

Es ist seit längerer Zeit bekannt, daß disubstituierte Dialkoxysilane R¹R²Si(OR³)₂ durch Grignard-Alkylierung oder -Arylierung von Tetraalkoxysilanen bzw. vereinzelt auch von monosubstituierten Trialkoxysilanen mit Grignard-Verbindungen hergestellt werden können (Houben-Weyl, Methoden der Organischen Chemie, XIII/5, 180 ff).

Als Reaktionsprodukte werden jedoch in der Regel Gemische von Diorganodialkoxysilanen mit Monoorganotrialkoxysilanen und/oder Triorganomonoalkoxysilanen erhalten, so daß zur Isolierung der gewünschten Diorganodialkoxysilane nachfolgend eine Trennoperation erforderlich ist und damit bei erhöhten Herstellungkosten eine relativ geringe Ausbeute in Kauf genommen werden muß (Z. Lasocki, Bull. Acad. Polon. Sci., Ser. Sci Chim. 12 (5), 281-287 (1964)).

Es wurde nun überraschend gefunden, daß durch Umsetzung von Monoorganotrialkoxysilanen R¹Si(OR³)₃ bzw. Tetraalkoxysilanen Si(OR³)₄ mit Grignard-Verbindungen R²MgX in geeigneten Lösungsmitteln in Abhängigkeit von der Struktur der Reste R¹ und R² bestimmte Diorganodialkoxysilane R¹R²Si(OR³)₂ mit hoher Selektivität in hoher Ausbeute zugänglich sind.

Die Erfindung betrifft somit ein Verfahren zur selektiven Herstellung von Diorganodialkoxysilanen der allgemeinen Formel 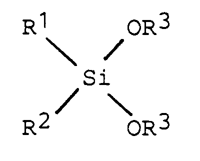
durch Umsetzung von Tetraalkoxysilanen der Formel Si(OR³)₄ bzw. Monoorganotrialkoxysilanen der Formel R¹Si(OR³)₃ mit Grignard-Verbindungen der Formel R²MgX (x = Cl, Br, J) in geeigneten Lösungsmitteln, das durch die folgende Bedeutung der Reste R gekennzeichnet ist:
- R¹ =: Verzweigte Alkylgruppe mit 3 - 10 C-Atomen mit sekundärem α- oder β-C-Atom oder Cycloalkylgruppe mit 3 bis 10 C-Atomen
- R² =: R¹ oder n-Alkylgruppe mit 3 - 10 C-Atomen
- R³ =: Alkylgruppe mit 1 bis 5 C-Atomen, wobei die Reste R³ gleich oder verschieden sein können, mit der Maßgabe, daß R¹ und R² nicht gleichzeitig Cycloalkyl sein können und wobei im Falle von Tetraalkoxysilanen R² nicht n-Alkyl bedeutet.

Bevorzugt sind dabei für die Reste R¹ und R² verzweigte Alkylgruppen mit 3 bis 6 C-Atomen bzw. Cycloalkylgruppen mit 5 bis 7 C-Atomen und für den Rest R³ Methyl- oder Ethylgruppen.

Gegebenenfalls unter Verwendung eines geringen Überschusses der Grignard-Verbindung R²MgX läßt sich das Monoorganotrialkoxysilan R¹Si(OR³)₃ bzw. das Tetraalkoxysilan Si(OR³)₄ nahezu quantitativ in das Diorganodialkoxysilan R¹R²Si(OR³)₂ überführen, ohne daß unter weiterer Alkylierung die Bildung des Triorganomonoalkoxysilans R¹R²₂SiOR³ beobachtet wird.

Die Umsetzung wird vorteilhaft bei Temperaturen von etwa 0 ° bis 90 °C durchgeführt.

Als Lösungsmittel kommen insbesondere Dialkylether in Frage, die aufgrund ihrer physikalischen Eigenschaften in dem genannten Temperaturbereich verwendbar sind.

Der Siedepunkt des Lösungsmittels sollte einerseits nicht zu niedrig sein und in einem solchen Bereich liegen, daß die Umsetzungstemperatur problemlos eingehalten werden kann, andererseits aber auch nicht so hoch sein, daß die Entfernung des Lösungsmittel aus dem Umsetzungsprodukt Schwierigkeiten bereitet. Besonders geeignet sind für das erfindungsgemäße Verfahren Dialkylether, wie Diethylether und insbesondere Methyl-tert.-butylether.

Die ansonsten für Grignard-Reaktion vielfach verwendeten cyclischen Ether Tetrahydrofuran oder 1,4-Dioxan haben sich für das erfindungsgemäße Verfahren als weniger geeignet herausgestellt.

Das erfindungsgemäße Verfahren soll beispielhaft anhand der Herstellung von Isobutylcyclohexyldimethoxysilan (R¹ = i-C₄H₉, R² = c-C₆H₁₂, R³ = CH₃) aus Isobutyltrimethoxysilan R¹Si(OR³)₃ (R¹ = i-C₄H₉, R³ = CH₃) (Gleichung 1) und Diisopropyldimethoxysilan (R¹ = R² = i-C₃H₇, R³ = CH₃) aus Tetramethoxysilan (R³ = CH₃) (Gleichung 2) gezeigt werden: 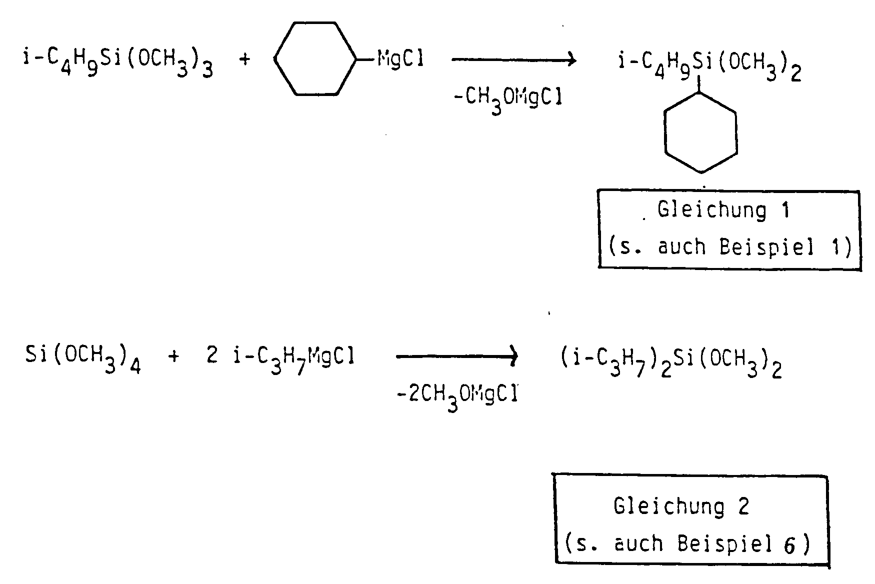
Vorteilhaft für die Aufarbeitung der Reaktionsmischung und und eine relativ hohe Reinheit des Produkts ist die Zersetzung der überschüssigen Grignard-Verbindung mit stöchiometrischen Mengen eines Alkohols R³OH. Nach Abtrennung des festen Nebenprodukts R³OMgX durch Filtration oder Zentrifugieren sowie nachfolgendem Abdampfen des Lösungsmittels erhält man die Diorganodialkoxysilane in Ausbeuten > 95 % und Reinheiten > 97 %, wobei diese Reinheiten dem eingangs genannten Verwendungszweck vollauf genügen und somit eine zusätzliche Reinigungsoperation erübrigen.

Eine weitere Vereinfachung der Herstellung von Diorganodialkoxysilanen resultiert, wenn man in Anlehnung an eine prinzipiell bekannte Vorgehensweise (Chemical Abstracts 32,7892; 105, 134116 n; 105, 134117 p, Columbus Ohio (USA)) auf die separate Herstellung der Grignard-Verbindung R²MgX verzichtet und das Monoorganotrialkoxysilan R¹Si(OR³)₃ bzw. Tetraalkoxysilan Si(OR³)₄ in Gegenwart eines geeigneten Lösungsmittels direkt mit metallischem Magnesium und einem Organohalogenid R²X umsetzt.

In Abhängigkeit von der Natur der Reste R¹ und R² wird auch hierbei im Gegensatz zum Stand der Technik eine hohe Selektivität beobachtet. So erhält man z. B. bei dieser Vorgehensweise Isobutylcyclohexyldimethoxysilan (vgl. dazu Gleichung 1) in einer Ausbeute von > 98 % und einer Reinheit > 97 % sowie Diisopropyldimethoxysilan (vgl. dazu Gleichung 2) in einer Ausbeute > 98 % und einer Reinheit > 98 %.

Weitere nach den erfindungsgemäßen Verfahren hergestellte Verbindungen sind den Beispielen 1 bis 6 sowie den Tabellen 1 und 2 zu entnehmen.

### Beispiel 1 a

### Isobutylcyclohexyldimethoxysilan

Unter Schutzgas werden 152,0 g Isobutyltrimethoxysilan ≙ 0,85 Mol) gelöst in 50 ml Diethylether vorgelegt. Unter Rühren werden 667 ml einer 1,5 molaren etherischen Lösung von Cyclohexylmagnesiumchlorid so zugetropft, daß sich mäßiger Rückfluß einstellt.
Nach Beendigung der Zugabe läßt man noch einige Stunden unter Rückfluß nachreagieren, versetzt nach Abkühlen des Reaktionsgemisches mit 4,8 g Methanol (≙ 0,15 Mol), läßt einige Minuten nachrühren und filtriert vom ausgefallenen Feststoff ab. Der Filterkuchen wird mit mehreren Portionen Diethylether gewaschen. Von den vereinigten Filtraten wird das Lösungsmittel im Wasserstrahlvakuum abgedampft. Es verbleiben 192,7 g (≙ 98,4 % der Theorie) Isobutylcyclohexyldimethoxysilan, welches gemäß Gaschromatographie (GC) eine Reinheit von 98 % aufweist. Isobutyldicyclohexylmethoxysilan ist gemäß GC nicht nachweisbar.

### Beispiel 1 b

### Isobutylcyclohexyldimethoxysilan

Unter Schutzgas werden 24,3 g Magnesiumspäne (≙ 1,0 Mol) mit ca. 10 ml Methyl-tert.-butylether, einem Jod-Kristall und 3,6 g Cyclohexylchlorid (≙ 0,03 Mol) versetzt. Nach Anspringen der Reaktion wird eine Lösung von 152,0 g Isobutyltrimethoxysilan (≙ 0,85 Mol) und 115,0 g Cyclohexylchlorid (≙ 0,97 Mol) in 130 ml Methyl-tert.-butylether unter Rühren so zugetropft, daß sich mäßiger Rückfluß einstellt.

Nach Beendigung der Zugabe läßt man noch 2 h unter Rückfluß nachreagieren, versetzt nach Abkühlen des Reaktionsgemisches mit 4,8 g Methanol (≙ 0,15 Mol), läßt einige Minuten nachrühren und filtriert vom ausgefallenen Feststoff ab. Der Filterkuchen wird mit mehreren Portionen Methyl-tert.-butylether gewaschen. Von den vereinigten Filtraten wird das Lösungsmittel im Wasserstrahlvakuum abgedampft. Es verbleiben 192,5 g (≙ 98,4 % der Theorie) Isobutylcyclohexyldimethoxysilan, welches gemäß GC eine Reinheit von 98 % aufweist. Isobutyldicyclohexylmethoxysilan ist gemäß GC nicht nachweisbar.

Analog zu der Vorgehensweise im Beispiel 1 erhält man folgende Diorganodimethoxysilane:

### Beispiel 2

### Isobutylcyclopentyldimethoxysilan

Reinheit: 97 %, Ausbeute: 98 % der Theorie.
Isobutyldicyclopentylmethoxysilan ist gemäß GC nicht nachweisbar.

### Beispiel 3

### Isobutyl-sec-butyldimethoxysilan

Reinheit: 98,5 %, Ausbeute: 98,3 % der Theorie.
Isobutyldi-sec-butylmethoxysilan ist gemäß GC nicht nachweisbar.

### Beispiel 4

### Isobutyl-n-propyldimethoxysilan

Reinheit: 99 %, Ausbeute: 98,2 % der Theorie.
Isobutyldi-n-propylmethoxysilan ist gemäß GC nicht nachweisbar.

### Beispiel 5

### Isobutylisopropyldimethoxysilan

Reinheit: 99 % Ausbeute: 98,1 % der Theorie.
Isobutyldiisopropylmethoxysilan ist gemäß GC nicht nachweisbar.

Wie das folgende Beispiel 6 zeigt, kann die Alkylierung von Tetraalkoxysilanen unter Bildung von Dialkyldialkoxysilanen ebenfalls mit hoher Selektivität ablaufen:

### Beispiel 6

### Diisopropyldimethoxysilan

Unter Schutzgas werden 24,2 g Magnesiumspäne (≙ 1,0 Mol) mit ca. 20 ml Methyl-tert.-butylether, einem Jod-Kristall und 3,1 g 2-Chlorpropan (≙ 0,04 Mol) versetzt. Nach Anspringen der Reaktion wird eine Lösung von 61,9 g Tetramethoxysilan (≙ 0,41 Mol) und 75,4 g 2-Chlorpropan (≙ 0,96 Mol) in 140 ml Methyl-tert.-butylether unter Rühren so zugetropft, daß sich mäßiger Rückfluß einstellt. Nach Beendigung der Zugabe läßt man noch 6 Stunden nachreagieren, versetzt nach Abkühlen mit 6,0 g Methanol (≙ 0,19 Mol), läßt einige Minuten nachrühren und filtriert vom ausgefallenen Feststoff ab.

Nach Waschen des Filterkuchens mit mehreren Portionen Methyl-tert.-butylether wird das Lösungsmittel von den vereinigten Filtraten abdestilliert. Es verbleiben 70,5 g Diisopropyldimethoxysilan(= 98,5 % der Theorie), welches gemäß GC eine Reinheit von 98 % aufweist. Triisopropylmethoxysilan ist gemäß GC nicht nachweisbar.

**Tabelle 1**

| Synthese von Diorganodialkoxysilanen ausgehend von Monoorganotrialkoxysilanen *) | | | |
|---|---|---|---|
| Edukt | Grignard-Verbindung | Produkt | Ausbeute (%) gemäß GC |
| secBuSi(OMe)₃ | iBuMgCl | secBuiBuSi(OMe)₂ | 98 |
| iBuSi(OMe)₃ | nPropMgCl | iBunPropSi(OMe)₂ | 99 |
| " | iPropMgCl | iBuiPropSi(OMe)₂ | 99 |
| " | cPentMgBr | iBucPentSi(OMe)₂ | 97 |
| " | cHexMgCl | iBucHexSi(OMe)₂ | 98 |
| nOcSi(OEt)₃ | secBuMgCl | nOcsecBuSi(OEt)₂ | 97 |
| iPropSi(OProp)₃ | cPentMgCl | iPropcPentSi(OProp)₂ | 98 |

**Tabelle 2**

| Synthese von Diorganodialkoxysilanen ausgehend von Tetraalkoxysilanen *) | | | |
|---|---|---|---|
| Edukt | Grignard-Verbindung | Produkt | Ausbeute (%) gemäß GC |
| Si(OMe)₄ | iPropMgCl | (iProp)₂Si(OMe)₂ | 98 |
| Si(OProp)₄ | iAmMgBr | iAm₂Si(OProp)₂ | 96 |
| Si(OProp)₄ | secBuMgCl | secBu₂Si(OProp)₂ | 98 |
| Si(OPent)₄ | secBuMgCl | secBu₂Si(OPent)₂ | 97 |

Aus dem Vergleichsbeispiel 1 ist ersichtlich, daß nach dem erfindungsgemäßen Verfahren Diorganodialkoxysilane R¹R²Si(OR³)₂ auch dann mit hoher Seleitivität zugänglich sind, wenn die Reaktion der Monoorganotrialkoxysilane R¹Si(OR³)₃ mit einem beträchtlichen Überschuß der gegebenenfalls in situ hergestellten Grignard-Verbindung R²MgX durchgeführt wird. Selbst unter solchen Bedingungen wird bei geeigneter Wahl der Rest R¹ und R² die Bildung von Triorganomonoalkoxysilanen R¹R²₂SiOR³ nicht beobachtet.

### Vergleichsbeispiel 1

### Versuch der Darstellung von Isobutyldiisopropylmethoxysilan

Analog zu Beispiel 1 werden 8,2 g Magnesiumspäne (≙ 0,338 Mol) mit 25,5 g 2-Chlorpropan (≙ 0,338 Mol) und 30,0 g Isobutyltrimethoxysilan (≙ 0,169 Mol) in 80 ml Methyl-tert.-butylether umgesetzt.

Es entsteht ausschließlich Isobutylisopropyldimethoxysilan. Isobutyldiisopropylmethoxysilan ist gemäß GC nicht nachweisbar.

Aus den in Tabelle 3 aufgeführten Vergleichsbeispielen geht hervor, daß die Reaktion von Monoorganotrialkoxysilanen R¹Si(OR³)₃ mit tert.-Butylmagnesiumbromid (R² = t-Butyl) nicht zur Bildung von entsprechenden Diorganodialkoxysilanen R¹R²Si(OR³)₂ führen. Des weiteren wird ersichtlich, daß die Bildung von Alkylaryldialkoxysilanen aus Monoalkyltrialkoxysilanen R¹Si(OR³)₃ und Arylmagnesiumhalogeniden R²MgX mit vergleichsweise geringer Selektivität abläuft, obwohl auch dabei das Diorganodialkoxysilan R¹R²Si(OR³)₂ als Hauptprodukt entsteht. Gleiches gilt auch für die Herstellung von Di-n-alkyldialkoxysilanen und Diaryldialkoxysilanen aus Tetraalkoxysilanen.

**Tabelle 3**

| Vergleichsbeispiele *) | | | |
|---|---|---|---|
| Edukt | Grignard-Verbindung | Produkt | Ausbeute (%) gemäß GC |
| iBuSi(OMe)₃ | tBuMgCl | - | keine Umsetzung |
| iBuSi(OMe)₃ | PhMgBr | iBuPhSi(OMe)₂ | 71 |
| | | iBuPh₂Si(OMe) | 13 |
| iBuSi(OMe)₃ | pTolMgBr | iBu(pTol)Si(OMe)₂ | 50 |
| | | iBu(pTol)₂Si(OMe) | 12 |
| Si(OMe)₄ | n-HexMgBr | nHexSi(OMe)₃ | 13 |
| | | nHex₂Si(OMe)₂ | 77 |
| | | nHex₃Si(OMe) | 10 |
| Si(OMe)₄ | pTolMgBr | pTolSi(OMe)₃ | 7 |
| | | pTol₂Si(OMe)₂ | 82 |
| | | pTol₃Si(OMe) | 4 |

| | | | |
|---|---|---|---|
| *) Verwendete Abkürzungen: Me = Methyl, Et = Ethyl, Prop. = Propyl, Am =Amyl, pTol = para-Tolyl, Ph = Phenyl; n = normal, i = iso, sec = sekundär, t = tertiär, c = cyclo, Bu = Butyl, Hex = Hexyl, Pent = Pentyl, Oc = Octyl. | | | |

## Patentansprüche

1. Verfahren zur selektiven Herstellung von Diorganodialkoxysilanen der allgemeinen Formel 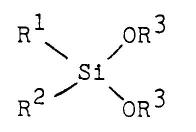 durch Umsetzung von Tetraalkoxysilanen der Formel Si(OR³)₄ bzw. Monoorganotrialkoxysilanen der Formel R¹Si(OR³)₃ mit Grignard-Verbindungen der Formel R²MgX (X = Cl, Br, J) in geeigneten Lösungsmitteln, gekennzeichnet durch die folgende Bedeutung der Reste R:
R¹ = Verzweigte Alkylgruppe mit 3 bis 10 C-Atomen mit sekundärem α - oder β-C-Atom oder Cycloalkylgruppe mit 3 bis 10 C-Atomen
R² = R¹ oder n-Alkylgruppe mit 3 bis 10 C-Atomen
R³ = Alkylgruppe mit 1 bis 5 C-Atomen, wobei die Reste R³ gleich oder verschieden sein können, mit der Maßgabe, daß R¹ und R² nicht gleichzeitig Cycloalkyl sein können und wobei im Falle von Tetraalkoxysilanen R² nicht n-Alkyl bedeutet.

2. Verfahren zur selektiven Herstellung von Dialkyldialkoxysilanen nach Anspruch 1, dadurch gekennzeichnet, daß die Reste R¹ und R² verzweigte Alkylgruppen mit 3 bis 6 C-Atomen sind.

3. Verfahren zur selektiven Herstellung von Alkylcycloalkyldialkoxysilanen nach Anspruch 1, dadurch gekennzeichnet, daß die Reste R¹ verzweigte Alkylgruppen mit 3 bis 6 C-Atomen und die Reste R² Cycloalkylgruppen mit 5 bis 7 C-Atomen sind.

4. Verfahren zur selektiven Herstellung von Diorganodialkoxysilanen nach den Ansprüchen 1 bis 4, dadurch gekennzeichnet, daß die Reste R³ Methyl- oder Ethylgruppen sind.

5. Verfahren zur selektiven Herstellung von Diorganodialkoxysilanen nach den Ansprüchen 1 bis 5, dadurch gekennzeichnet, daß die Grignard-Verbindung R²MgX in situ gebildet wird.

6. Verfahren zur selektiven Herstellung von Diorganodialkoxysilanen nach den Ansprüchen 1 bis 6, dadurch gekennzeichnet, daß der Rest X, Cl oder Br ist.

7. Verfahren zur selektiven Herstellung von Diorganodialkoxysilanen nach den Ansprüchen 1 - 7, dadurch gekennzeichnet, daß die Umsetzung in Methyl-tert.-butylether durchgeführt wird.

8. Verfahren zur selektiven Herstellung von Diorganodialkoxysilanen nach den Ansprüchen 1 bis 8, dadurch gekennzeichnet, daß nach der Umsetzung ein in Reaktionsgemisch vorhandener Überschuß der Grignard-Verbindung R²MgX mit stöchiometrischen Mengen des Alkohols R³OH unter Bildung des festen Nebenprodukts R³OMgX zersetzt wird.

## Claims

1. Process for the selective preparation of diorganodialkoxysilanes having the general formula 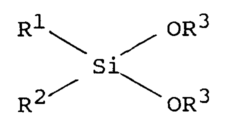 by reacting tetraalkoxysilanes having the formula Si(OR³)₄ or monoorganotrialkoxysilanes having the formula R¹Si(OR³)₃ with Grignard reagents having the formula R²MgX (X = Cl, Br, I) in suitable solvents, characterised by the following meaning of the radicals R:
R¹ is a branched alkyl group having from 3 to 10 carbon atoms with a secondary α- or β-carbon atom or a cycloalkyl group having from 3 to 10 carbon atoms,
R² = R¹ or is an n-alkyl group having from 3 to 10 carbon atoms,
R³ is an alkyl group having from 1 to 5 carbon atoms, it being possible for the radicals R³ to be identical or different,
with the proviso that R¹ and R² may not simultaneously be cycloalkyl and wherein, in the case of tetraalkoxysilanes, R² does not represent n-alkyl.

2. Process for the selective preparation of dialkyldialkoxysilanes according to claim 1, characterised in that the radicals R¹ and R² are branched alkyl groups having from 3 to 6 carbon atoms.

3. Process for the selective preparation of alkylcycloalkyldialkoxysilanes according to claim 1, characterised in that the radicals R¹ are branched alkyl groups having from 3 to 6 carbon atoms and the radicals R² are cycloalkyl groups having from 5 to 7 carbon atoms.

4. Process for the selective preparation of diorganodialkoxysilanes according to claims 1 to 3, characterised in that the radicals R³ are methyl or ethyl groups.

5. Process for the selective preparation of diorganodialkoxysilanes according to claims 1 to 4, characterised in that the Grignard reagent R²MgX is formed in situ.

6. Process for the selective preparation of diorganodialkoxysilanes according to claims 1 to 5, characterised in that the radical X is Cl or Br.

7. Process for the selective preparation of diorganodialkoxysilanes according to claims 1 to 6, characterised in that the reaction is carried out in methyl tert-butyl ether.

8. Process for the selective preparation of diorganodialkoxysilanes according to claims 1 to 7, characterised in that, after the reaction, an excess of the Grignard reagent R²MgX present in the reaction mixture is decomposed with stoichiometric amounts of the alcohol R³OH forming the solid secondary product R³OMgX.

## Revendications

1. Procédé pour la préparation sélective de diorganodialcoxysilanes de formule générale 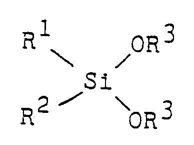 par réaction de tétraalcoxysilanes de formule Si(OR³)₄, respectivement de monoorganotrialcoxysilanes de formule R¹Si(OR³)₃ avec des composés de Grignard de formule R²MgX (X = Cl, Br, I), dans des solvants appropriés, caractérisé par les significations suivantes des radicaux R :
R¹ représente un groupe alkyle ramifié avec 3 à 10 atomes de carbone, avec un atome de carbone α ou β secondaire ou un groupe cycloalkyle avec 3 à 10 atomes de carbone,
R² représente R¹ ou un groupe n-alkyle avec 3 à 10 atomes de carbone,
R³ représente un groupe alkyle avec 1 à 5 atomes de carbone, les radicaux R³ pouvant être identiques ou différents, à la condition que R¹ et R² ne peuvent pas être simultanément un cycloalkyle et, dans le cas de tétraalcoxysilanes, R² ne signifiant pas un n-alkyle.

2. Procédé pour la préparation sélective de dialkyldialcoxysilanes selon la revendication 1, caractérisé en ce que les radicaux R¹ et R² sont des groupes alkyle ramifiés avec 3 à 6 atomes de carbone.

3. Procédé pour la préparation sélective des alkylcycloalkyldialcoxysilanes selon la revendication 1, caractérisé en ce que les radicaux R¹ sont des groupes alkyle ramifiés avec 3 à 6 atomes de carbone et les radicaux R² des groupes cycloalkyle avec 5 à 7 atomes de carbone.

4. Procédé pour la préparation sélective de diorganodialcoxysilanes selon les revendications 1 à 3, caractérisé en ce que les radicaux R³ sont des groupes méthyle ou éthyle.

5. Procédé pour la préparation sélective de diorganodialcoxysilanes selon les revendications 1 à 4, caractérisé en ce que le composé de Grignard R²MgX se forme *in situ*.

6. Procédé pour la préparation sélective de diorganodialcoxysilanes selon les revendications 1 à 5, caractérisé en ce que le radical X est Cl ou Br.

7. Procédé pour la préparation sélective de diorganodialcoxysilanes selon les revendications 1 à 6, caractérisé en ce qu'on réalise la réaction dans de l'éther méthyl-tert-butylique.

8. Procédé pour la préparation sélective de diorganodialcoxysilanes selon les revendications 1 à 7, caractérisé en ce que, après la réaction, on décompose l'excédent en composé de Grignard R²MgX présent dans le mélange réactionnel par des quantités stoechiométriques d'alcool R³OH en formant le sous-produit solide R³OMgX.
